# FASCICULE DE BREVET EUROPEEN

(11) **EP 1 109 301 B1**
(45) Date de publication et mention de la délivrance du brevet: **11.06.2003**
(21) Numéro de dépôt: 99125017.6
(22) Date de dépôt: 15.12.1999
(51) Int. Cl.: H02K 29/12, H02P 6/18

(54) **Machine électrique sans balais ayant des moyens de détection de la position angulaire du rotor**
Bürstenlosen Motor mit Vorrichtung zur Ermittlung der Rotorstellung
Brushless electric motor with rotor position sensing means

(43) Date de publication de la demande: 20.06.2001
(73) Titulaire: Bien-Air Holding SA, CH-2504 Bienne (CH)
(72) Inventeur: Mosimann, Vincent, 2520 La Neuveville (CH)
(74) Mandataire: Laurent, Jean

(56) Documents cités:
- EP-A- 0 234 663
- EP-A- 0 720 283
- WO-A-99/09645
- US-A- 5 256 923
- US-A- 5 796 195

## Description

La présente invention concerne une machine électrique sans balais comportant un stator à enroulements polyphasés, un rotor pourvu d'au moins un aimant permanent à aimantation radiale par rapport à l'axe du rotor et d'une structure amagnétique entourant au moins partiellement l'aimant, et des moyens de détection de position angulaire du rotor.

L'invention est applicable particulièrement à la détection de la position angulaire du rotor pour l'asservissement de l'alimentation polyphasée à fréquence et amplitude variables de moteurs électriques synchrones à aimants permanents qui sont dépourvus d'organes structurels indiquant la position du rotor, cette alimentation pouvant être sinusoïdale ou par impulsions de courant continu. Des moteurs de ce genre sont préférés dans certains domaines d'application comme les instruments médicaux ou dentaires parce que, vu les dimensions réduites des instruments, il est nécessaire de réduire autant que possible le volume du moteur et le nombre des connexions entre le moteur et son dispositif de commande.

L'asservissement a notamment pour but d'obtenir un couple maximal, et d'éviter le décrochage du moteur synchrone. En particulier aux basses vitesses, il devrait permettre de bien maîtriser le couple et la vitesse et d'effectuer des cycles de travail spéciaux, opérant sur un nombre réduit de tours ou sur des fractions de tours du rotor.

Les dispositifs classiques d'asservissement utilisant par exemple des capteurs magnétiques Hall ou un codeur angulaire pour indiquer la position du rotor ont pour inconvénients un certain encombrement dans le moteur, ainsi que des connexions électriques supplémentaires entre le moteur et son dispositif de commande. D'autres dispositifs connus utilisent des transformateurs de tension pour détecter des variations d'impédance des enroulements statoriques, mais ces composants lourds et encombrants constituent aussi un inconvénient.

Il est connu d'utiliser des tensions à haute fréquence appliquées aux enroulements statoriques pour détecter des variations d'impédance de ces enroulements en fonction de la position du champ magnétique du rotor. Par exemple le document JP 9-163788 A prévoit d'estimer la position du rotor à l'arrêt à partir de trois tensions de haute fréquence mesurées sur les trois phases du stator, afin de pouvoir commander le démarrage du moteur avec un maximum de couple et de rendement.

Cependant, l'inventeur a constaté que lorsqu'un enroulement statorique est branché en série dans un circuit oscillant et qu'on observe la fréquence de résonance de ce circuit, cette fréquence varie à cause des variations d'impédance du circuit, qui sont liées notamment aux variations du flux magnétique du rotor dans les enroulements statoriques. On peut calculer la position angulaire du rotor à partir des variations de cette fréquence. Dans la demande de brevet français No 98 09153, publiée après le dépôt de la présente demande, il est décrit l'utilisation de deux circuits oscillants ayant des fréquences de résonance différentes pour calculer la position angulaire du rotor en marche et commander en conséquence les impulsions d'alimentation du moteur.

L'inventeur a observé qu'un rotor équipé d'un aimant permanent fritté provoque par lui-même une variation de fréquence de l'ordre de 10% en fonction de sa position angulaire par rapport aux enroulements statoriques traversés par cette fréquence. Cette variation est attribuée à la structure moléculaire préférentiellement alignée, c'est-à-dire anisotrope, résultant de la fabrication de l'aimant. Malheureusement, la variation de fréquence ainsi obtenue est relativement faible et partiellement aléatoire. Bien qu'utilisable, cette variation ne permet pas une grande précision.

Un but de la présente invention consiste à perfectionner une machine électrique du type indiqué plus haut, de façon à amplifier la variation de la fréquence de résonance du circuit oscillant et permettre ainsi une détection plus aisée et précise de la position angulaire du rotor, que ce soit en marche ou à l'arrêt.

A cet effet, une machine électrique selon l'invention est caractérisée en ce que ladite structure amagnétique du rotor présente des zones d'épaisseurs différentes ou de perméabilités différentes le long du pourtour de l'aimant.

En d'autres termes, l'intervalle radial entre la surface périphérique de l'aimant rotorique et la surface intérieure des pièces polaires statoriques, qui comprend l'entrefer et ladite structure amagnétique, offre des conditions de passage du flux magnétique qui sont variables le long du pourtour du rotor. Ces conditions dépendent à la fois de la nature et de l'épaisseur des couches présentes dans cet intervalle, y compris l'entrefer.

Il en résulte que le flux magnétique à haute fréquence produit à travers le rotor par les enroulements statoriques grâce au circuit oscillant varie avec la position angulaire du rotor non seulement à cause de la nature de l'aimant, mais en plus à cause de la configuration de la structure amagnétique entourant celui-ci. Un choix judicieux de la géométrie de cette structure par rapport aux pôles de l'aimant permet d'augmenter l'effet recherché. De préférence, lesdites zones d'épaisseurs ou perméabilités différentes sont disposées symétriquement par rapport à un plan perpendiculaire à la direction d'aimantation de l'aimant et passant par l'axe du rotor.

Dans les petits moteurs de ce genre, il est bien connu de loger l'aimant rotorique dans une douille en métal amagnétique dont le rôle est avant tout d'empêcher un éclatement de l'aimant sous l'effet de la force centrifuge. Dans les applications médicales, qui exigent notamment des opérations de stérilisation, le métal utilisé est en général le laiton à cause de sa facilité d'usinage et sa bonne résistance à la corrosion. Dans une forme de réalisation avantageuse de l'invention, la structure amagnétique du rotor comporte une telle douille, ayant des évidements qui forment des ouvertures ou des parties amincies de la douille. Ces évidements peuvent avantageusement être remplis d'une matière diélectrique, par exemple une résine époxy.

Il faut noter qu'une machine électrique selon l'invention peut être soit un moteur, soit une génératrice, soit une machine capable de fonctionner dans les deux modes.

Dans une forme de réalisation avantageuse, les moyens de détection de position angulaire du rotor comportent des moyens de mesure agencés pour être connectés sélectivement à des enroulements du stator de façon à former un circuit oscillant et pour détecter des variations de la fréquence de résonance dudit circuit oscillant. Cependant, il importe de noter que les principes de la présente invention sont utilisables aussi avec d'autres types de moyens de détection. A cet égard, les courants de Foucault Induits dans la douille métallique du rotor jouent un grand rôle dans les méthodes de détection à utiliser.

D'autres avantages de l'invention apparaîtront dans la description suivante de diverses formes de réalisation, en référence aux dessins annexés, dans lesquels :
- la figure 1 représente schématiquement un moteur électrique sans balais selon l'invention, avec des moyens de commande et des moyens de détection de la position angulaire de son rotor,
- la figure 2 représente en coupe schématique une forme de réalisation du rotor,
- les figures 3 à 10 sont des vues analogues à la figure 2 et représentent d'autres formes de réalisation du rotor,
- les figures 11 à 13 représentent en perspective différentes configurations de la douille entourant le rotor, et
- les figures 14 à 16 représentent des variations de fréquence obtenues lors d'essais de différents rotors ayant des configurations selon les figures 11 à 13.

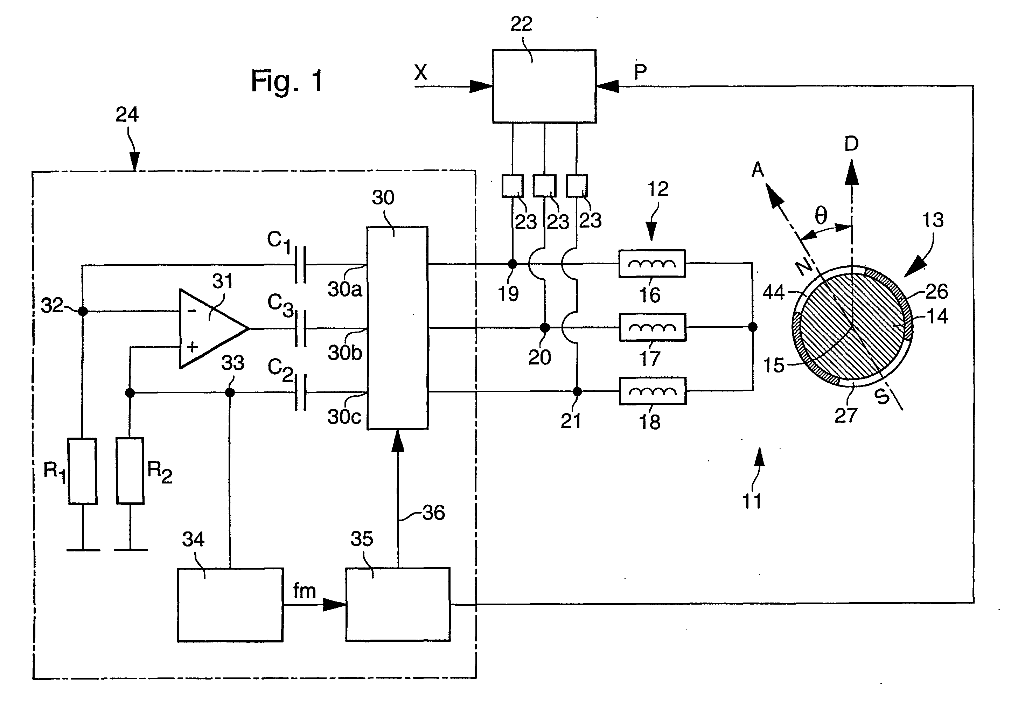

Dans la figure 1, il est représenté un moteur électrique synchrone sans balais 11 ayant un stator polyphasé 12 et un rotor 13 à aimant permanent 14 dont l'axe de rotation est indiqué par 15. Le stator 12 comporte trois enroulements de phases 16, 17 et 18 qui sont connectés en étoile ou en triangle, leurs bornes 19, 20 et 21 étant alimentées, à travers des filtres coupe-bande 23, par un dispositif de commande 22 qui comprend un générateur de tensions triphasées, de préférence sinusoïdales. Les filtres 23 sont agencés pour bloquer la bande de la haute fréquence f décrite plus loin. Le dispositif de commande 22 comprend également, de manière connue, des moyens de réglage qui permettent de faire varier l'amplitude, la fréquence et la phase des tensions d'alimentation, en fonction de signaux de consigne X donnés par un opérateur, ainsi que d'un signal P qui représente une position angulaire du rotor 13. Le signal P est fourni par des moyens 24 de détection de position angulaire du rotor.

L'aimant 14 du rotor 13 a une aimantation radiale, représentée par un axe d'aimantation A dont la position angulaire à un instant donné est représentée par un angle θ qu'il fait avec une direction de référence D fixe par rapport au stator. On notera toutefois que la présente invention est également applicable si l'aimant 14 est multipolaire ou si le rotor 13 comporte plusieurs aimants, avec un ou plusieurs axes d'aimantation tels que l'axe A.

Comme on le décrira plus loin, le rotor 13 comporte, autour de l'aimant 14, une structure amagnétique 26 qui présente des zones d'épaisseurs différentes ou de perméabilités magnétiques différentes le long du pourtour de l'aimant. Dans l'exemple représenté à la figure 1, la structure amagnétique 26 est formée par une douille en laiton dans laquelle on a ménagé des ouvertures 44.

Les moyens de détection 24 comportent un circuit de commutation 30 permettant de connecter sélectivement ses entrées 30a, 30b et 30c aux bornes 19, 20 et 21 du stator 12. Un condensateur C1 et une résistance R1 sont connectés en série entre l'entrée 30a et la terre, et de même un condensateur C2 et une résistance R2 sont connectés en série entre l'entrée 30c et la terre. En outre, l'entrée 30b est connectée, à travers un condensateur C3, à la sortie d'un amplificateur opérationnel 31 dont l'entrée négative est connectée à la jonction 32 entre C1 et R1, et dont l'entrée positive est connectée à la jonction 33 entre C2 et R2. La jonction 33 est également connectée à un circuit de mesure de fréquence 34 qui délivre un signal de mesure fm à des moyens de calcul 35 constitués par exemple par un microprocesseur. Ces moyens 35 sont reliés au circuit de commutation 30 par une liaison 36 pour le commander, et d'autre part, ils exploitent les valeurs du signal fm pour calculer la position angulaire 6 du rotor 13 et délivrer le signal P représentant cette position au dispositif de commande 22.

Les moyens de calcul 35 commandent le circuit de commutation 30 de façon effectuer des cycles de mesure comprenant chacun une séquence de trois états commutation successifs. Les entrées 30a, 30b et 30c du circuit 30 sont ainsi connectées respectivement aux bornes 19, 20 et 21 dans le premier état, aux bornes 20, 21 et 19 dans le deuxième état, et aux bornes 21, 19 et 20 dans le troisième état. Dans chacun de ces états, l'amplificateur 31, les résistances R1 et R2, les condensateurs C1, C2 et C3 et les inductances des enroulements 16, 17 et 18 forment un circuit oscillant ayant une haute fréquence de résonance f. Celle-ci dépend en particulier desdites inductances, lesquelles varient avec la position angulaire θ du champ magnétique du rotor. La durée de chaque cycle est très courte, par exemple inférieure à 48 µs, si bien que l'angle θ et donc la fréquence de résonance varient très peu au cours du cycle, ou pas du tout si le rotor est à l'arrêt. Cette fréquence instantanée, mesurée par le circuit 34, est représentée par le signal de mesure fm.

Les moyens de calcul 35 reçoivent ainsi, dans chaque cycle de mesure, trois mesures de fréquence fm1, fm2 et fm3 qui correspondent à des positions mutuellement décalées de 120° de la commutation sur les enroulements statoriques. Deux de ces mesures suffisent à un homme du métier pour calculer la position angulaire instantanée θ du rotor, la troisième pouvant servir de moyen de contrôle.

A partir des valeurs de θ représentées par le signal P, les moyens d'asservissement incorporés au dispositif de commande 22 peuvent calculer notamment la vitesse du rotor et le déphasage entre le champ tournant et le rotor, pour commander l'alimentation du moteur 11 en fonction de ces paramètres et des signaux de consigne X.

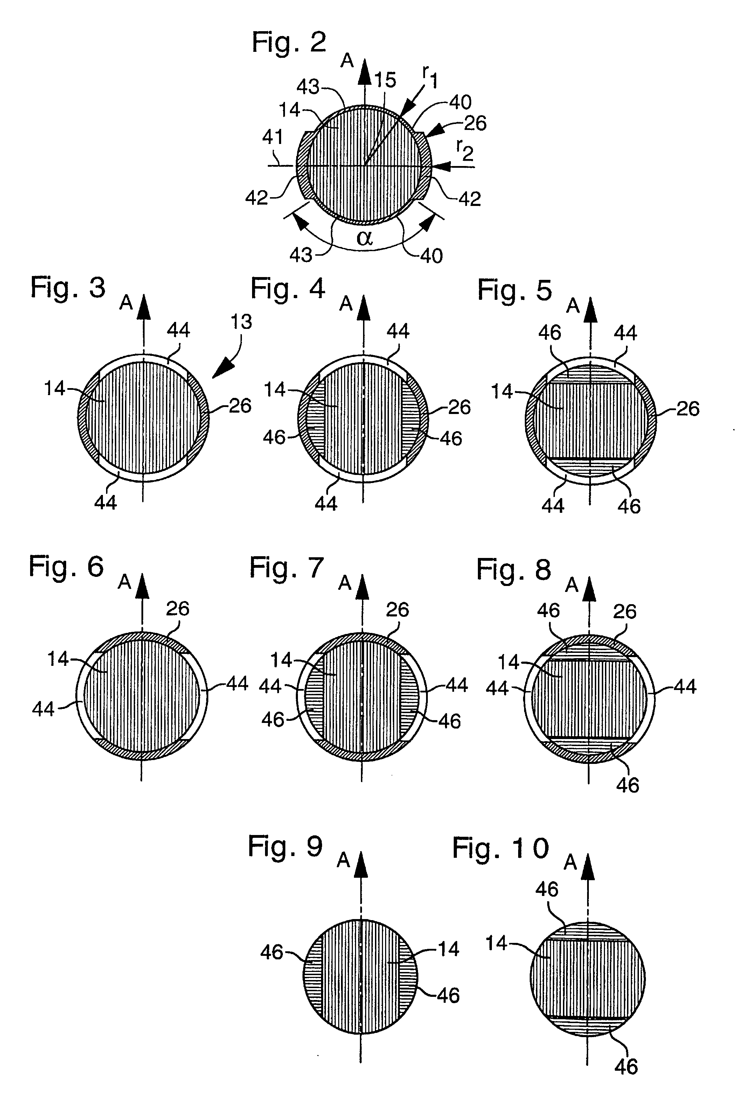

Les figures 2 à 8 illustrent différentes formes de réalisation du rotor 13, dans lesquelles la structure amagnétique entourant l'aimant 14 est constituée d'une douille métallique 26, par exemple en laiton. En pratique, l'aimant est généralement traversé par un arbre central du rotor, c'est-à-dire qu'il a une forme tubulaire.

Dans le cas de la figure 2, l'aimant 14 est cylindrique. La douille 26 a une surface inférieure cylindrique appliquée contre l'aimant. Sur sa surface extérieure, elle présente deux évidements 40 qui s'étendent sur une partie seulement de l'épaisseur de la douille et ont chacun une extension angulaire α. Les deux évidements 40 sont symétriques l'un de l'autre par rapport à un plan axial 41 perpendiculaire à la direction d'aimantation A et passant par l'axe 15 du rotor. Les évidements 40 déterminent ainsi, le long du pourtour de la douille 26, deux zones 42 d'épaisseur normale et deux zones 43 d'épaisseur réduite, formées par les parties amincies de la douille. En d'autres termes, la surface extérieure de la douille 26 présente un rayon maximal r₂ dans les zones 42 et un rayon r₁ plus petit dans les zones 43. Si l'on désire que le rotor ait un pourtour circulaire, il est possible de remplir chaque évidement 40 d'un matériau ayant une perméabilité égale à ou meilleure que celle de l'air et nettement moins bonne que celle de la douille 26. Ce matériau peut renforcer la douille et être constitué, par exemple, par une résine époxy.

L'exemple de la figure 3 est analogue à celui de la figure 2, sauf que les évidements 40 sont remplacés par des ouvertures 44 traversant toute l'épaisseur de la douille 26. Chaque ouverture 44 peut être constituée par une fente longitudinale s'étendant sur la majeure partie de la longueur de l'aimant 14. Toutefois, on peut aussi prévoir une rangée de plusieurs ouvertures 44 le long de chaque côté du rotor, comme on le verra plus loin.

Le rotor représenté à la figure 4 a sensiblement la même configuration que celui de la figure 3, sauf que l'aimant 14 présente, de part et d'autre de l'axe d'aimantation A, deux surfaces latérales plates, le long desquelles des segments de cylindre métalliques sont logés entre l'aimant 14 et la douille 26. Ces segments peuvent être par exemple en fer doux, en acier, en cuivre ou en laiton. Ils créent une variation supplémentaire de la perméabilité du rotor vis-à-vis du flux magnétique statorique, en fonction de la position angulaire du rotor par rapport à ce flux.

La configuration illustrée par la figure 5 diffère de celle de la figure 4 par le fait que les segments 46 sont placés entre l'aimant 14 et les ouvertures 44, donc en regard des pôles de l'aimant.

Les exemples des figures 6 à 8 diffèrent respectivement de ceux des figures 3 à 5 par le fait que les ouvertures 44 de la douille 26 ne sont pas disposées en regard des pôles de l'aimant 14, mais latéralement, c'est-à-dire de part et d'autre de l'axe d'aimantation A. Ainsi, ce sont les parties non évidées de la douille 26 qui recouvrent les pôles de l'aimant.

Les exemples des figures 9 et 10 correspondent à ceux des figures 7 et 8, dans lesquels on a supprimé la douille 26, c'est-à-dire que le circuit magnétique du rotor comprend essentiellement l'aimant 14 et les segments cylindriques 46. Dans le cas de la figure 9, les segments 46 sont placés latéralement par rapport à l'axe d'aimantation A, tandis qu'ils sont placés en regard des pôles de l'aimant dans le cas de la figure 10. Dans ces deux cas, on peut envisager de renforcer le rotor aux moyens d'éléments structurels ne jouant pas un rôle magnétique notable, par exemple une chemise en résine ou des bagues encastrées dans des rainures circulaires de façon à ne pas dépasser la périphérie de l'aimant 14 et des segments 46 et permettant ainsi de réduire l'entrefer à un minimum.

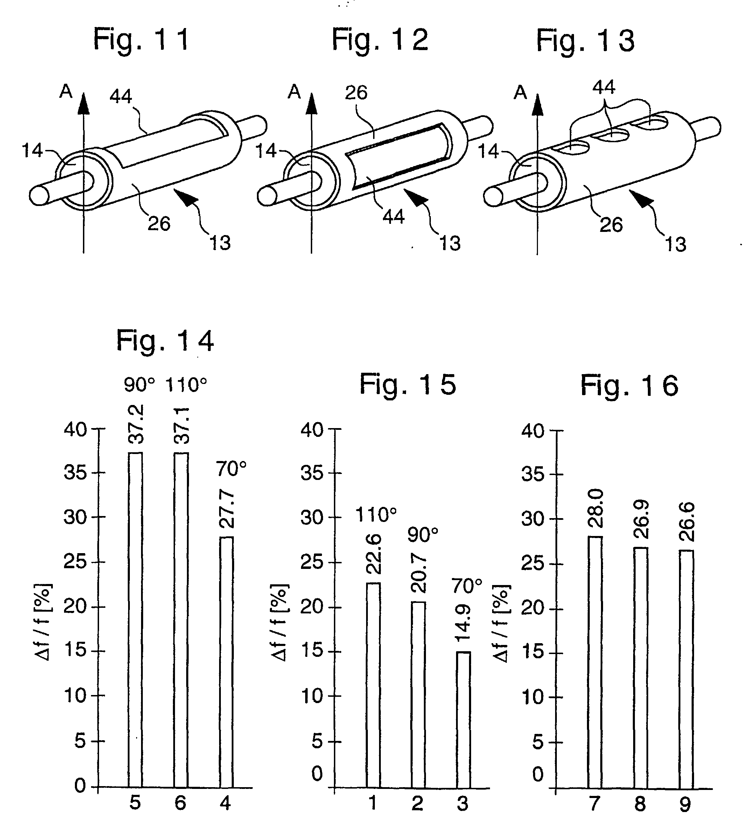

Le demandeur a procédé à des essais comparatifs pour mettre en évidence les avantages offerts par l'invention. Les figures 11 à 13 représentent schématiquement différentes configurations de la gaine 26 de certains des rotors 13 ayant fait l'objet des essais. Les aimants utilisés étaient réalisés en samarium-cobalt. Dans certains échantillons, l'aimant 14 avait une forme extérieure cylindrique et dans d'autres échantillons on lui a joint des segments cylindriques 46 comme décrits plus haut. L'arbre 48 du rotor traversait l'aimant et était en acier inoxydable trempable.

Dans la configuration de la figure 11, deux ouvertures 44 en forme de fentes sont disposées en regard des pôles du rotor conformément à la figure 3, c'est-à-dire qu'elles sont symétriques l'une de l'autre par rapport à un plan perpendiculaire à l'axe d'aimantation A. Au contraire, dans l'exemple de la figure 12, deux ouvertures 44 en forme de fentes sont disposées latéralement comme le montre la figure 6, c'est-à-dire qu'elles sont symétriques par rapport à un plan passant par l'axe d'aimantation A. L'exemple de la figure 13 est semblable à celui de la figure 11, sauf qu'il comporte deux rangées d'ouvertures circulaires 44 à la place des ouvertures en forme de fentes. On a également essayé, à titre de témoin, un rotor comportant un aimant 14 cylindrique et une gaine 26 d'épaisseur constante et sans ouverture, et l'on a mesuré une variation de fréquence de résonance qui ne dépasse pas 10%.

Les figures 14 à 16 représentent la variation relative de fréquence Δf/f mesurée lors des essais avec neuf échantillons de rotors, numérotés de 1 à 9. La fréquence moyenne f des circuits oscillants utilisés était de l'ordre de 1,7 MHz. Δf est la différence entre la fréquence maximale et la fréquence minimale mesurées sur un échantillon durant un tour du rotor à faible vitesse.

Les résultats représentés à la figure 14 ont été obtenus avec une configuration conforme aux figures 3 et 11, avec différentes extensions angulaires α des fentes 44 : α vaut 70° dans l'échantillon 4, 90° dans l'échantillon 5 et 110° dans l'échantillon 6.

Les résultats représentés à la figure 15 correspondent à une configuration selon les figures 6 et 12. L'extension angulaire α des ouvertures 44 vaut 110° dans l'échantillon 1, 90° dans l'échantillon 2 et 70° dans l'échantillon 3. On constate que les résultats sont moins bons que ceux de la figure 14, mais restent nettement meilleurs que celui de l'échantillon témoin.

Les résultats représentés à la figure 16 correspondent à une configuration de la gaine 26 selon la figure 13. Dans les échantillons 7 et 8, l'aimant est flanqué de deux segments métalliques latéraux 46 comme on le voit dans la figure 4, ces segments étant en acier dans l'échantillon 7 et en laiton dans l'échantillon 8. Dans l'échantillon 9, l'aimant a une forme cylindrique comme le montre la figure 3. On remarque que ces trois échantillons donnent de bons résultats, mais que l'effet des segments 46 est marginal.

En ce qui concerne l'extension angulaire α des ouvertures 44 en forme de fentes, les figures 14 et 15 montrent que l'efficacité, c'est-à-dire Δf/f, tend à augmenter avec α, mais qu'une valeur de α sensiblement égale à 90° représente un optimum, étant donné que les ouvertures ne devraient pas être trop larges afin de ne pas réduire excessivement la résistance mécanique de la douille 26.

## Revendications

1. Machine électrique sans balais comportant un stator (12) à enroulements polyphasés, un rotor (13) pourvu d'au moins un aimant permanent (14) à aimantation radiale par rapport à l'axe du rotor et d'une structure amagnétique (26) entourant au moins partiellement l'aimant, et des moyens (24) de détection de position angulaire du rotor,
**caractérisée en ce que** ladite structure amagnétique (26) présente des zones (42, 43, 44) d'épaisseurs différentes ou de perméabilités différentes le long du pourtour de l'aimant.

2. Machine selon la revendication 1, **caractérisée en ce que** lesdites zones sont disposées symétriquement par rapport à un plan (41) perpendiculaire à la direction d'aimantation de l'aimant et passant par l'axe du rotor.

3. Machine selon la revendication 1 ou 2, **caractérisée en ce que** ladite structure amagnétique comporte une douille métallique (26) ayant des évidements (40) qui forment des parties amincies (43) de la douille.

4. Machine selon la revendication 1 ou 2, **caractérisée en ce que** ladite structure amagnétique comporte une douille métallique (26) ayant des évidements formés par deux rangées axiales d'ouvertures (44), ces rangées étant diamétralement opposées.

5. Machine selon la revendication 1 ou 2, **caractérisée en ce que** ladite structure amagnétique comporte une douille métallique (26) ayant des évidements formés par deux fentes (44) diamétralement opposées.

6. Machine selon l'une des revendications 3 à 5, **caractérisée en ce que** lesdits évidements sont remplis d'une matière diélectrique.

7. Machine selon l'une des revendications 3 à 5, **caractérisée en ce que** lesdits évidements ont chacun une extension angulaire comprise entre 70° et 110°, et de préférence sensiblement égale à 90°.

8. Machine selon l'une des revendications 3 à 5, **caractérisée en ce que** la douille (26) est en laiton.

9. Machine selon l'une des revendications précédentes, **caractérisée en ce que** l'aimant (14) a une forme extérieure cylindrique.

10. Machine selon l'une des revendications 1 à 8, **caractérisée en ce que** l'aimant (14) a une forme extérieure comprenant deux surfaces cylindriques, symétriques l'une de l'autre et reliées par deux surfaces planes.

11. Machine selon la revendication 10, **caractérisée en ce que** chacune desdites surfaces planes est recouverte d'un segment de cylindre (46) en métal.

12. Machine selon l'une des revendications précédentes, **caractérisée en ce que** l'aimant (14) a une structure anisotrope.

13. Machine selon l'une des revendications précédentes, **caractérisée en ce que** les moyens de détection de position angulaire du rotor (24) comportent des moyens de mesure (34, 35) agencés pour être connectés sélectivement à des enroulements du stator de façon à former un circuit oscillant et pour détecter des variations de la fréquence de résonance dudit circuit oscillant.

## Claims

1. Brushless electric machine including a stator (12) with polyphase windings, a rotor (13) having at least one permanent magnet (14) magnetised radially relative to the axis of the rotor and a non-magnetic structure (26) at least partially surrounding the magnet, and means (24) for detecting the angular position of the rotor,
**characterized in that** said non-magnetic structure (26) has zones (42, 43, 44) of different thicknesses or of different permeabilities around the circumference of the magnet.

2. Machine according to claim 1, **characterized in that** said zones are disposed symmetrically relative to a plane (41) perpendicular to the direction of magnetisation of the magnet and passing through the axis of the rotor.

3. Machine according to claim 1 or 2, **characterized in that** said non-magnetic structure includes a metal sleeve (26) having recesses (40) which form thinned parts (43) of the sleeve.

4. Machine according to claim 1 or 2, **characterized in that** said non-magnetic structure includes a metal sleeve (26) having recesses formed by two axial rows of openings (44), said rows being diametrically opposite.

5. Machine according to claim 1 or 2, **characterized in that** said non-magnetic structure includes a metal sleeve (26) having recesses formed by two diametrically opposite slots (44).

6. Machine according to any of claims 3 to 5, **characterized in that** said recesses are filled with a dielectric material.

7. Machine according to any of claims 3 to 5, **characterized in that** said recesses each have an angular extent lying between 70° and 110°, and preferably substantially equal to 90°.

8. Machine according to any of claims 3 to 5, **characterized in that** the sleeve (26) is of brass.

9. Machine according to any of the preceding claims, **characterized in that** the magnet (14) has a cylindrical external shape.

10. Machine according to any of claims 1 to 8, **characterized in that** the magnet (14) has an external shape comprising two cylindrical surfaces symmetrical with one another, connected by two flat surfaces.

11. Machine according to claim 10, **characterized in that** each of said flat surfaces is covered by a metal segment of a cylinder (46).

12. Machine according to any of the preceding claims, **characterized in that** the magnet (14) has an anisotropic structure.

13. Machine according to any of the preceding claims, **characterized in that** the means (24) for detecting the angular position of the rotor include measuring means (34, 35) arranged to be connected selectively to windings of the stator in such a manner as to form an oscillatory circuit and to detect variations in the frequency of resonance of said oscillatory circuit.

## Patentansprüche

1. Bürstenlose Elektromaschine, die einen Stator (12) mit Mehrphasenwicklungen, einen Rotor (13), der mit wenigstens einem Permanentmagneten (14) mit in bezug auf die Achse des Rotors radialer Magnetisierung sowie mit einer nicht magnetischen Struktur (26), die den Magneten wenigstens teilweise umgibt, versehen ist, und Mittel (24) für die Erfassung der Winkelposition des Rotors umfaßt,
**dadurch gekennzeichnet, daß** die nicht magnetische Struktur (26) längs des Umfangs des Magneten Zonen (42, 43, 44) mit unterschiedlichen Dicken oder unterschiedlichen Permeabilitäten aufweist.

2. Maschine nach Anspruch 1, **dadurch gekennzeichnet, daß** die Zone in bezug auf eine Ebene (41), die zu der Magnetisierungsrichtung des Magneten senkrecht ist und durch die Achse des Rotors verläuft, symmetrisch angeordnet sind.

3. Maschine nach Anspruch 1 oder 2, **dadurch gekennzeichnet, daß** die nicht magnetische Struktur eine metallische Hülse (26) aufweist, die Aussparungen (40) besitzt, die verdünnte Abschnitte (43) der Hülse bilden.

4. Maschine nach Anspruch 1 oder 2, **dadurch gekennzeichnet, daß** die nicht magnetische Struktur eine metallische Hülse (26) aufweist, die Aussparungen besitzt, die durch zwei axiale Reihen von Öffnungen (44) gebildet sind, wobei diese Reihen diametral entgegengesetzt sind.

5. Maschine nach Anspruch 1 oder 2, **dadurch gekennzeichnet, daß** die nicht magnetische Struktur eine metallische Hülse (26) aufweist, die Aussparungen besitzt, die durch zwei diametral entgegengesetzte Schlitze (44) gebildet sind.

6. Maschine nach einem der Ansprüche 3 bis 5, **dadurch gekennzeichnet, daß** die Aussparungen mit einem dielektrischem Werkstoff gefüllt sind.

7. Maschine nach einem der Ansprüche 3 bis 5, **dadurch gekennzeichnet, daß** die Aussparungen jeweils eine Winkelerstreckung im Bereich von 70° bis 110° und vorzugsweise von im wesentlichen 90° besitzen.

8. Maschine nach einem der Ansprüche 3 bis 5, **dadurch gekennzeichnet, daß** die Hülse (26) aus Messing ist.

9. Maschine nach einem der vorhergehenden Ansprüche, **dadurch gekennzeichnet, daß** der Magnet (14) eine zylindrische äußere Form hat.

10. Maschine nach einem der Ansprüche 1 bis 8, **dadurch gekennzeichnet, daß** der Magnet (14) eine äußere Form hat, die zwei zylindrische Oberflächen umfaßt, die zueinander symmetrisch und durch zwei ebene Flächen miteinander verbunden sind.

11. Maschine nach Anspruch 10, **dadurch gekennzeichnet, daß** jede der ebenen Flächen von einem Zylindersegment (46) aus Metall abgedeckt ist.

12. Maschine nach einem der vorhergehenden Ansprüche, **dadurch gekennzeichnet, daß** der Magnet (14) eine anisotrope Struktur hat.

13. Maschine nach einem der vorhergehenden Ansprüche, **dadurch gekennzeichnet, daß** die Mittel für die Erfassung der Winkelposition des Rotors (24) Meßmittel (34, 35) umfassen, die so beschaffen sind, daß sie wahlweise mit Wicklungen des Stators verbunden werden können, damit sie eine Oszillatorschaltung bilden, und Änderungen der Resonanzfrequenz dieser Oszillatorschaltung erfassen.
